# EUROPEAN PATENT SPECIFICATION

(11) **EP 3 028 845 B1**
(45) Date of publication and mention of the grant of the patent: **06.03.2019**
(21) Application number: 15186156.4
(22) Date of filing: 22.09.2015
(51) Int. Cl.: B32B 3/04, B64C 1/06, B29C 67/00, B29D 99/00, B29C 70/08

(54) **COMPOSITE BLADE STRINGER EDGE PROTECTION AND VISUAL DAMAGE INDICATION**
KANTENSCHUTZ UND VISUELLE BESCHÄDIGUNGSANZEIGE FÜR FASERVERBUND-STRINGER
PROTECTION DE BORD DE LONGERON DE PALE EN MATÉRIAUX COMPOSITES ET INDICATION DE DÉTÉRIORATION VISUELLE

(30) Priority: 04.12.2014 US 201414560533
(43) Date of publication of application: 08.06.2016
(73) Proprietor: The Boeing Company, Chicago, IL 60606-1596 (US)
(72) Inventor: Korenaga, Brian H., Chicago, IL 60606-1596 (US); Albers, Robert G., Chicago, IL 60606-1596 (US); Burtord, Ian C., Chicago, IL 60606-1596 (US); Sampedro-Thompson, William M., Chicago, IL 60606-1596 (US); Evans, David W., Chicago, IL 60606-1596 (US)
(74) Representative: Witte, Weller & Partner Patentanwälte mbB

(56) References cited:
- US-A1- 2001 053 432
- US-A1- 2006 234 007
- US-A1- 2008 087 768
- US-A1- 2008 128 430
- US-A1- 2011 220 006

## Description

### Background

Composite blade stringers are often used in aircraft and other vehicles and structures. Blade stringers may be created by bonding two angle charges, a base charge on the bottom and a filler in the space created between the angle charges and base charge together. The angle charges are created with layers of successive plies of composite material. The resulting web and base flanges of a composite blade stringer include multiple layers of material bonded to one another. When subjected to impact by an object with sufficient energy to cause barely visible impact damage (BVID), the layers may partially split or delaminate. This damage may lead to a reduction of the stringer buckling strength under compressive loads as the delaminated area is unable to adequately distribute the compressive forces in the damaged area.

It is with respect to these considerations and others that the disclosure made herein is presented.

The document US 2008/087768 A1 discloses a composite aircraft stringer having an end surface protector, wherein the stringer is made up of a number of plies of laminate materials. A number of unidirectional pre-preg patches are laid over an end surface of the stringer for forming the end surface protector. A curing process is conducted. The curing process adhesively bonds the pre-preg patches to the stringer and also hardens them. As result, the pre-preg patches define a deflecting surface that protects the end surface from direct impacts and the resultant delamination of the composite laminate structure.

Document US 2000128430 A1 discloses an edge seal for a cut edge of a carbon fibre reinforced polymer laminate, whereas two semi-cured or B-staged edge seal portions are wrapped around the edge of a spar in an overlapping manner.

### Summary

The invention is defined by the independent claims 1 and 11.

It should be appreciated that this Summary is provided to introduce a selection of concepts in a simplified form that are further described below in the Detailed Description. This Summary is not intended to be used to limit the scope of the claimed subject matter.

Systems and methods described herein provide for edge protection and visual damage indication for a composite blade stringer. According to one aspect, an edge protection and visual indication system is provided. The system includes a composite blade stringer having a base and a web. The web extends away from the base and defines an outer edge opposite the base. An edge treatment includes a number of material layers encompassing the outer edge of the web and extending from a first surface of the web to a second surface of the web.

According to the disclosure a method for providing composite stringer edge protection and visual damage indication may include applying an edge treatment to an outer edge of a web of a composite blade stringer. The edge treatment includes at least
two material layers and encompasses the outer edge of the web, extending from a first surface of the web to a second surface of the web.

The edge protection and visual damage indication system for a composite blade stringer includes two pre-cured angles. A first pre-cured angle has a first vertical segment and a first horizontal segment. A second pre-cured angle has a second vertical segment and a second horizontal segment. The first and second horizontal segments are each sized to a length that allows for overlap with one another over a range of widths of a web of the composite stringer. When assembled, the first vertical segment is configured to abut a first surface of the web, the second vertical segment is configured to abut a second surface of the web opposite the first surface, and the first and second horizontal segments overlap and abut an outer edge of the web.

The features, functions, and advantages that have been discussed may be combined in yet other embodiments, further details of which can be seen with reference to the following description and drawings.

### Brief Description Of The Drawings

FIGURE 1A is a perspective view of a conventional composite blade stringer with impact damage to the web of the composite blade stringer;
FIGURE 1B is a cross-sectional view of the conventional composite blade stringer taken along line A-A in FIGURE 1A;
FIGURE 1C is a perspective view of a conventional composite blade stringer buckling under a compressive load due to impact damage to the web of the composite blade stringer;
FIGURE 2 is a perspective view of an edge protection and visual damage indication system showing a composite blade stringer having an edge treatment according to various embodiments presented herein;
FIGURE 3A is a cross-sectional view of the composite blade stringer with edge treatment taken along line B-B in FIGURE 2 according to various embodiments presented herein;
FIGURE 3B is an enlarged view of an edge of the composite blade stringer of FIGURE 3A showing components of the edge treatment according to various embodiments presented herein;
FIGURE 4A is a cross-sectional view of the composite blade stringer with edge treatment taken along line B-B in FIGURE 2 according to alternative embodiments presented herein;
FIGURE 4B is an enlarged view of an edge of the composite blade stringer of FIGURE 4A showing components of the edge treatment according to alternative embodiments presented herein;
FIGURE 5 is a perspective view of an edge protection and visual damage indication system showing a composite blade stringer having an edge treatment according to alternative embodiments presented herein;
FIGURE 6 is an enlarged cross-sectional view of the composite blade stringer with edge treatment taken along line C-C in FIGURE 5 according to alternative embodiments presented herein;
FIGURE 7 is a flow diagram showing a method of providing edge protection and visual damage indication for a composite blade stringer according to various embodiments presented herein; and
FIGURE 8 is a flow diagram showing a method of providing an alternative configuration of an edge protection and visual damage indication for a composite blade stringer according to various embodiments presented herein.

### Detailed Description

The following detailed description is directed to an edge protection and visual damage indication system and corresponding method that utilizes an edge treatment on an outer edge of a web of a composite blade stringer. As discussed above, traditional composite blade stringers are exposed to damage due to impacts with objects along an outer edge of the web of the stringer. An impact on the edge of the web may cause delamination between the layers of composite material, which if undetected, could create buckling when the stringer experiences compressive loads. Visual indication of damage caused by impacts can be difficult to detect. The different embodiments described below may be applied to trimmed edges of stringers having other configurations such as, for example and without limitation, I, J and Z cross-sectional configurations. Stringers having I, J, and Z cross-sectional configurations are well known in the art to have cross-sections that are shaped to approximately resemble the capital letters "I," "J," and "Z," respectively.

Utilizing the concepts and technologies described herein, an edge treatment is applied to an outer edge of a web of a composite blade stringer. The edge treatment provides protection to the stringer web by decreasing the amount of damage caused by impacts while additionally decreasing the risk of undetected damage caused by these types of impacts. According to various embodiments, multiple fiberglass fabric layers may be applied to the web via an adhesive layer. The fiberglass provides protection against damage caused by impacts to the web, as well as inhibiting or delaying the onset of subsequent buckling under compression loading that could result from any damage sustained by the web. According to one embodiment, a color contrasting layer may be applied under or between the fiberglass fabric layers to supplement the protective properties of the fiberglass while providing for a visual contrast to the fiberglass in order to facilitate visual detection of possible impact damage.

The color contrasting layer may be a carbon fiber reinforced plastic (CFRP) tape. The CFRP tape may be black in color, while the overlying fiberglass fabric layers are lighter in color. An impact to the edge treatment may cause a localized delamination between the CFRP tape and the fiberglass fabric or epoxy resin crazing, which is easily visualized due to the contrasting colors between the layers. This visualization provides an indication of potential damage to the web of the stringer, which would be more difficult with conventional CFRP composite blade stringers having no edge treatment, which would also likely result in more damage to the web. The edge treatment serves the additional purpose of increasing the residual strength of the stringer post-impact. Early detection of potential damage allows for repair or monitoring that could ultimately prevent buckling and failure of the stringer. Moreover, by strengthening and supporting the composite stringer web, according to the disclosure provided herein, the composite stringer may be manufactured in smaller form or with less material, which decreases the weight of the overall stringer and vehicle as a whole.

In the following detailed description, references are made to the accompanying drawings that form a part hereof, and which are shown by way of illustration, specific embodiments, or examples. Referring now to the drawings, in which like numerals represent like elements through the several figures, an edge protection and visual damage indication system and method for employing the same according to the various embodiments will be described.

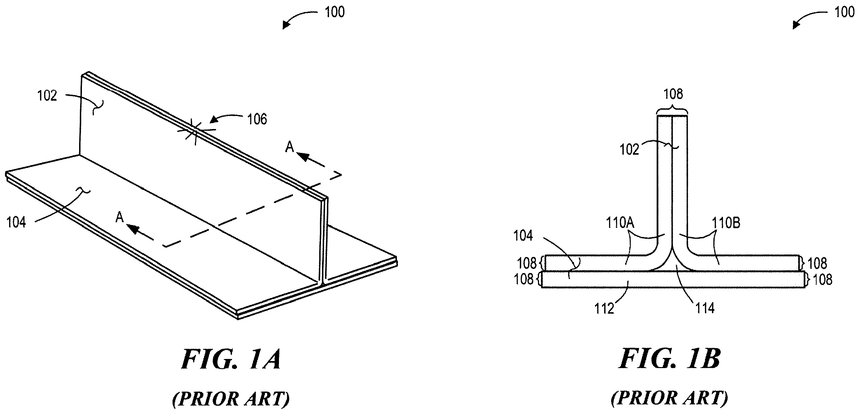

FIGURE 1A shows a perspective view of a conventional composite blade stringer 100 having experienced an impact with an object at location 106. The conventional composite blade stringer 100 includes a web 102 and a base 104. As seen in FIGURE 1B, the conventional composite blade stringer 100 includes two angle charges 110A and 110B (generally and collectively referred to as 110). The vertical portions of the angle charges 110 are bonded together to create the web 102, while the base 104 is created by bonding the horizontal portions extending from the web 102 to a stringer base material 112 (or an aircraft skin) with a filler 114 in between. As mentioned above, the angle charges 110 are typically created with a number of layers 108 of composite material.

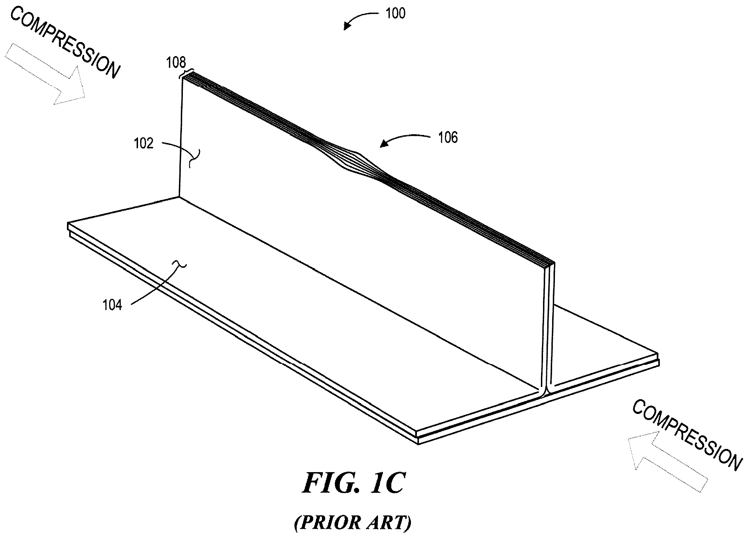

Looking at FIGURE 1C, the potential results of the impact at location 106 on a conventional composite blade stringer 100 can be visualized. The impact at location 106 may cause delamination between the material layers 108 of the web 102, which may be difficult to detect without the embodiments described below. As the damaged stringer is subjected to compression forces, as indicated by the open arrows in FIGURE 1C, the damaged portion of the web 102 at location 106 may buckle, separating the layers of the composite material and leading to failure.

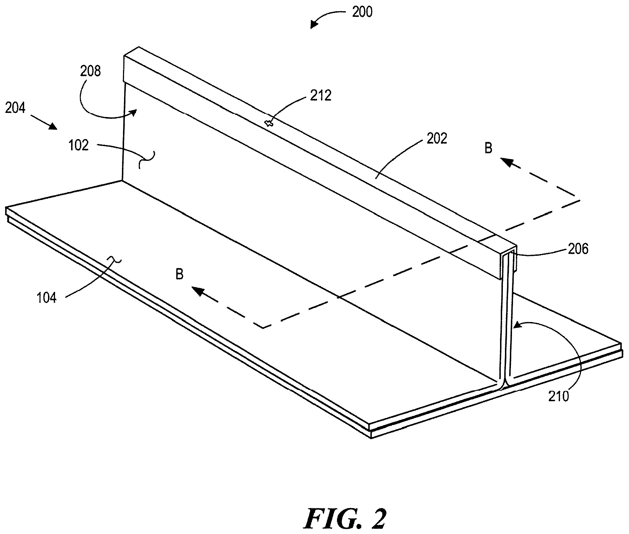

FIGURE 2 shows an edge protection and visual damage indication system 200. Accordingly, a composite blade stringer 204 includes a web 102 extending away from a base 104, similar to the conventional composite blade stringer 100 described above. However, an outer edge 206 of the web 102 opposite the base 104 is encompassed by an edge treatment 202.

The edge treatment 202 provides multiple benefits over a conventional unprotected outer edge 206 of a conventional composite blade stringer 100. First, the edge treatment 202 provides protection to the outer edge 206 of the web 102 by absorbing and distributing forces from an impact with an object. This protection inhibits separation or damage to the layers 108 of the composite blade stringer 204, or mitigates the damage if the impact is of sufficient force to cause damage to the web 102 under the edge treatment 202.

Second, the edge treatment provides support to the web 102 if an impact damages the stringer. By extending from a first surface 208 of the web 102 to a second surface 210 of the web 102 and encompassing the outer edge 206 between the opposing surfaces, the edge treatment 202 acts to hold the layers 108 of the web 102 together if compression forces are introduced that would otherwise create buckling at the location 106 of the separated layers 108. Finally, the edge treatment 202 creates a visual indication 212 in response to an impact with an object. As will be explained in further detail below, the visual indication 212 is created due to separation of a color contrasting layer with an adjacent layer of the edge treatment 202 or epoxy resin crazing within the adjacent layer. This visual indication 212 provides a visual notification to a technician or other user that an impact has occurred and that further inspection is necessary to determine whether or not any damage has been caused to the underlying composite blade stringer 204.

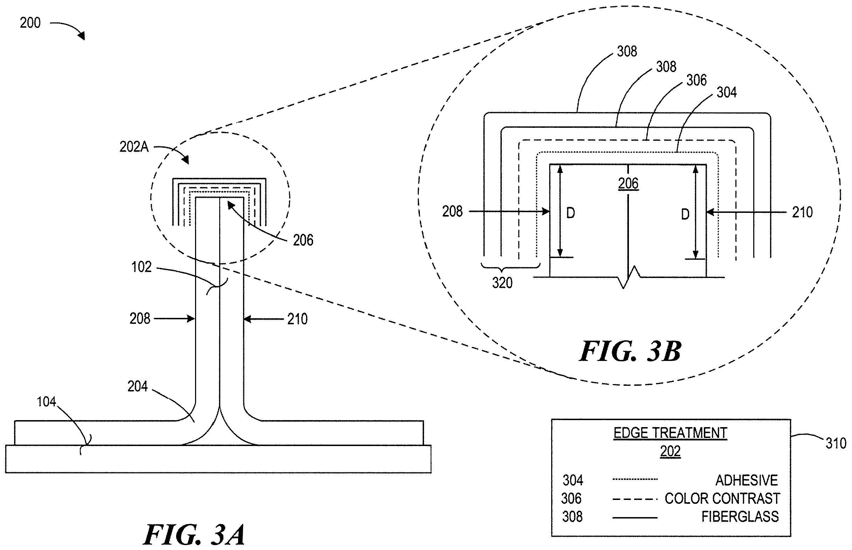

FIGURE 3A shows a cross-sectional view of the composite blade stringer 204 taken along line B-B in FIGURE 2, while FIGURE 3B shows an enlarged view of the outer edge 206 of the web 102 of the composite blade stringer 204. Looking at FIGURES 3A and 3B, along with the key 310, it can be seen that configuration 202A of the edge treatment 202 includes a number of material layers 320. According to configuration 202A, the material layers 320 comprise four layers, including an adhesive layer 304, sequentially arranged from the outer edge 206 of the web 102 outward. The adhesive layer 304 is applied to the outer surface of the web 102 of the composite blade stringer 204, or to the adjacent color contrasting layer 306 for coupling the color contrasting layer 306 to the web 102. The adhesive layer 304 may include, but is not limited to, various types of one-part and two-part epoxy films, pastes, or liquids; one-part and two-part silicones; and other chemistries such as polyesters, urethanes, and acrylics.

A color contrasting layer 306 is positioned over the adhesive layer 304. The color contrasting layer may have any color that, when separated or delaminated from an adjacent layer, will provide a visual color contrast from surrounding de-laminated areas between the adjacent layers or from epoxy resin crazing within other layers. According to one embodiment, the color contrasting layer 306 includes a composite tape layer that is black in color to contrast the adjacent fiberglass layer 308 discussed below. The color contrasting layer may include, but is not limited to, carbon fiber reinforced plastic (CFRP) tapes and fabrics; dyed fiberglass reinforced plastic (GFRP) tapes and fabrics; dyed aramid fiber reinforced plastic tapes and fabrics; and hybrids of these materials. The color contrasting layer may also include, but is not limited to, any other method of imparting color contrast between adhesive layer 304 and adjacent layers.

According to this example, the edge treatment 202 includes two fiberglass layers 308 on top of the color contrasting layer 306. Each fiberglass layer 308 may include a fiberglass fabric. The fiberglass layers 308 provide protection against impacts, while also providing a contrast in color when applied to the color contrasting layer 306. It should be appreciated that the disclosure herein is not limited to the precise configurations shown in the drawings and described herein. For example, while the edge treatment 202 shown in FIGURES 3A and 3B includes 4 material layers 320, and specifically two fiberglass layers 308, any number of material layers 320 may be utilized without departing from the scope of this disclosure. In this example, two fiberglass layers 308 and a single color contrasting layer 306 provide adequate impact protection while minimizing weight; however, other materials may be used if they provide the same approximate behavior and any number of fiberglass layers 308 and/or color contrasting layers 306 may be used.

The edge treatment 202 wraps around the outer edge 206 of the web 102 of the composite blade stringer 204. Accordingly, edge treatment 202 begins a distance D from the outer edge 206 on the first surface 208 of the web 102. The edge treatment 202 then wraps around the outer edge 206 and terminates a distance D from the edge on a second surface 210 of the web 102 opposite the first surface 208. The distances D on the first surface 208 and on the second surface 210 may be equivalent, but are not limited to being equivalent. The distance D may include any dimension suitable for providing the desired protective and structural properties given the specific implementation.

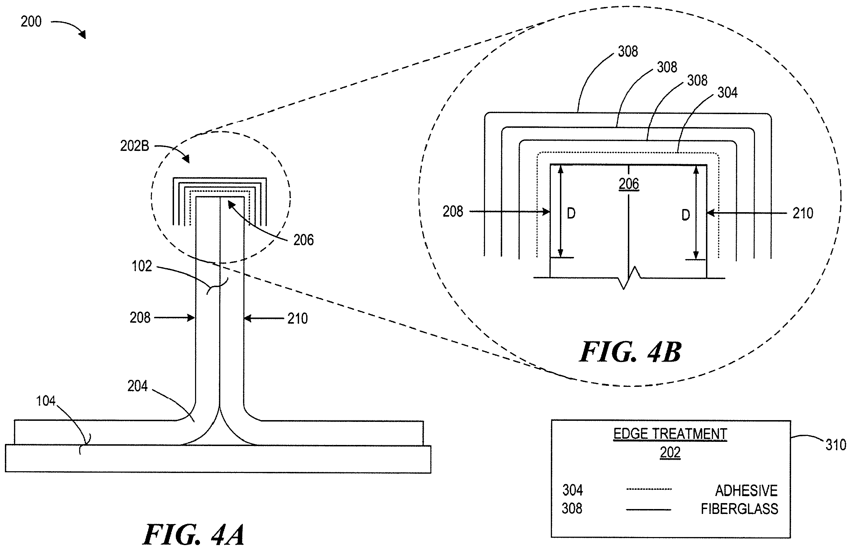

Turning now to FIGURES 4A and 4B, cross-sectional and enlarged views of the composite blade stringer 204 taken along line B-B in FIGURE 2 show configuration 202B of the edge treatment 202. This alternative configuration replaces the color contrasting layer 306 of configuration 202A of FIGURES 3A and 3B with a third fiberglass layer 308. While configuration 202B does not provide the same level of improved visual indication capabilities of configuration 202A, configuration 202B with three fiberglass layers 308 still provides a contrasting visual indication, protection against impacts, and inhibits or delays onset of subsequent buckling of the layers 108 of the web 102.

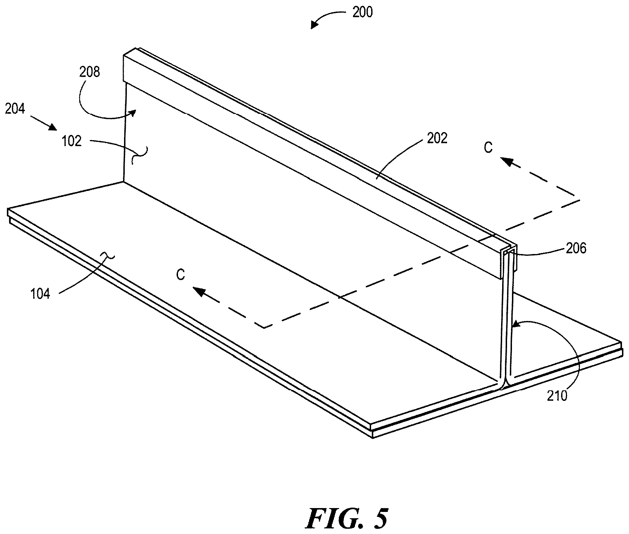

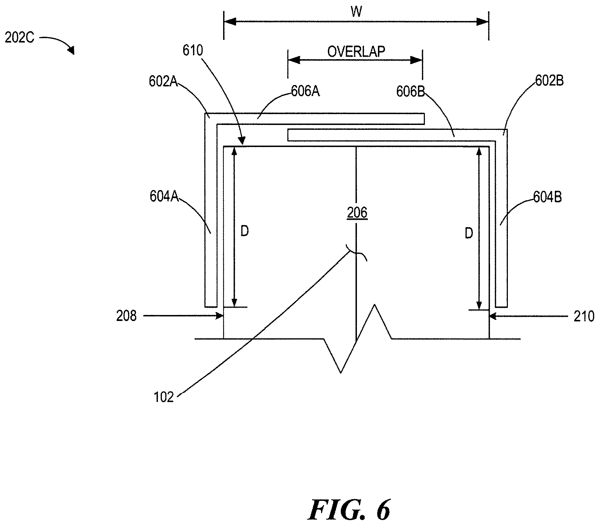

FIGURE 5 shows a perspective view of an edge protection and visual damage indication system 200 showing a composite blade stringer 204 having an edge treatment 202. FIGURE 6 is an enlarged cross-sectional view of the outer edge 206 of the composite blade stringer 204 with edge treatment 202 taken along line C-C in FIGURE 5.

The edge treatment 202 has a configuration 202C. Configuration 202C of the edge treatment 202 includes two pre-cured angles 602, a first pre-cured angle 602A and a second pre-cured angle 602B (referred to generally and collectively as pre-cured angles 602). When installed, the first pre-cured angle 602A and the second pre-cured angle 602B are bonded to the first surface 208 of the web 102, the outer edge 206 of the web 102, and the second surface 210 of the web 102 to provide protection in a similar manner to the edge treatments 202 of the first and second configurations 202A and 202B, respectively, described above.

Each of the pre-cured angles 602 is made and stocked in inventory, ready for use with any composite blade stringer 204 having a web 102 within a range of widths W. The pre-cured angles 602A and 602B include vertical segments 604A and 604B (referred to generally and collectively as vertical segments 604), respectively, and horizontal segments 606A and 606B (referred to generally and collectively as horizontal segments 606), respectively. The vertical segments 604 and horizontal segments 606 are configured at a non-zero angle with respect to one another to create the pre-cured angles 602. As seen in FIGURE 6, the second pre-cured angle 602B may be positioned against the outer edge 206 of the web 102 of a composite blade stringer 204 such that the vertical segment 604B abuts the second surface 210 of the web 102, and the horizontal segment 606B abuts a top surface 610 of the outer edge 206. The first pre-cured angle 602A is similarly configured such that the vertical segment 604A abuts the first surface 208 of the web 102, and the horizontal segment 606A could abut the top surface 610 of the outer edge 206 (although in FIGURE 6, the horizontal segment 606B of the second pre-cured angle 602B is positioned between the horizontal segment 606A and the top surface 610).

The lengths of the vertical segments 604A and 604B are sized according to the desired distance D from the top surface 610 for which the edge treatment 202 will be coupled to the web 102. According to one embodiment, because the first pre-cured angle 602A overlaps the second pre-cured angle 602B on the top surface 610 rather than directly abutting the top surface 610, the length of the vertical segment 604A may be longer than the length of the vertical segment 604B of the second pre-cured angle 602B in order to maintain equivalent distances D from the top surface 610 on both the first surface 208 and the second surface 210 of the web 102. According to other embodiments, the lengths of the vertical segments 604A and 604B may be equivalent.

The lengths of the horizontal segments 606 of the pre-cured angles 602 may be sized according to the range of widths W of the composite blade stringers 204 to which the edge treatment 202 will be utilized. According to one embodiment, the horizontal segment 606A and the horizontal segment 606B overlap within a range of overlap widths to create two layers of pre-cured angles segments over the top surface 610. By overlapping within a range of overlap widths, the pre-cured angles 602A and 602B may be utilized with varying composite blade stringers having webs of varying thicknesses or widths. In addition, the procured angles 602 may be compatible with a single composite blade stringer having a web of variable thickness or width. In this implementation, the pre-cured angles 602 may be formed in a manner that compliments the variable web thickness, or may be formed with constant dimensions and with appropriate darts that account for the variable width or contours of the associated composite blade stringer.

The pre-cured angles 602 may be manufactured from layers of fiberglass fabric, similar to the fiberglass layers 308 described above. Alternatively, the pre-cured angles 602 may be manufactured from layers of CFRP or other composite material, similar to the color contrasting layers 306 described above. Further still, each pre-cured angle 602 may be manufactured from any number of layers, having a combination of fiberglass layers 308 and color contrasting layers 306, similar to the configuration 202A of the edge treatment 202 described above with respect to FIGURES 3A and 3B. An adhesive (not shown) may be used to bond the pre-cured angles 602 to the web 102 and to each other where the horizontal segments 606A and 606B overlap. According to one embodiment, the pre-cured angles 602 may be utilized in an area such as an aircraft wing fuel tank having stringent electro-static requirements. In these and similar environments, the pre-cured angles 602 may be CFRP.

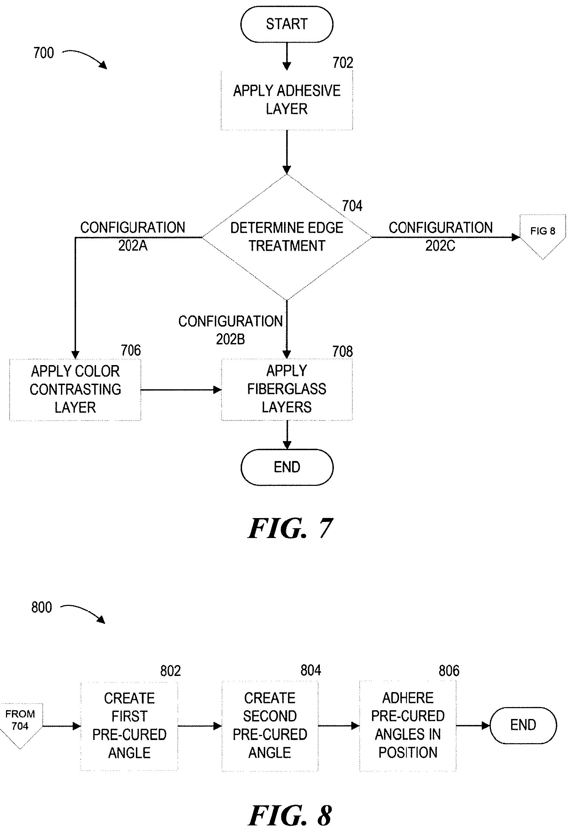

Turning now to FIGURE 7, additional details will be provided regarding embodiments presented herein for providing composite blade stringer edge protection and visual damage indication. It should be appreciated that more or fewer operations may be performed than shown in the figures and described herein. These operations may also be performed in parallel, or in a different order than those described herein.

FIGURE 7 shows a routine 700 for providing composite blade stringer edge protection and visual damage indication. The routine 700 begins at operation 702, where an adhesive layer 304 is applied to the outer edge 206 of a composite blade stringer 204. The adhesive layer 304 may alternatively or additionally be applied to a first layer of an edge treatment 202 to be bonded to the composite blade stringer 204, or may be omitted altogether if co-curing the edge treatment 202 with the composite blade stringer 204. At operation 704, the routine 700 proceeds according to the configuration of the edge treatment 202 to be applied to the composite blade stringer 204. Specifically, if configuration 202C having two pre-cured angles 602 is to be used, then the routine proceeds to FIGURE 8 and continues as described below with respect to routine 800.

However, if configuration 202A having a color contrasting layer 306 is to be used, then the routine 700 proceeds from operation 704 to operation 706, where the color contrasting layer 306 is applied to the adhesive layer 304. As described above, the color contrasting layer 306 may include a layer of CFRP tape. The routine 700 continues from operation 706 to operation 708. Returning to operation 704, if the configuration 202B described above with respect to FIGURES 4A and 4B is desired, the routine 700 proceeds directly to operation 708, without the application of the color contrasting layer 306 at operation 706.

At operation 708, the desired number of fiberglass layers 308 are applied sequentially to complete the edge treatment 202. As discussed above, according to one embodiment, configuration 202A may include one color contrasting layer 306 and two fiberglass layers 308. According to another embodiment, configuration 202B may include three fiberglass layers 308.

FIGURE 8 continues from operation 704 when configuration 202C having two pre-cured angles 602 is desired. At operation 802, the first pre-cured angle 602A is created. The first pre-cured angle 602A may include fiberglass fabric, CFRP, or other composite materials. The first pre-cured angle 602A includes a first vertical segment 604A and a first horizontal segment 606A. The lengths of the two segments may depend on the particular implementation, and specifically on the desired distance D of bonding from the top surface 610 of the outer edge 206 of the web 102 of the composite blade stringer 204 and on the range of widths W of the composite blade stringers 204 on which the edge treatment 202 will be used.

From operation 802, the routine 800 continues to operation 804, where the second pre-cured angle 602B is created. The second pre-cured angle 602B may be created in a similar manner as the first pre-cured angle 602A, but with the second horizontal segment 606B extending from the second vertical segment 604B in an opposite direction as compared to the horizontal segment 606A of the first pre-cured angle 602A. As described above, if the distance D on opposing surfaces of the web 102 is to be equivalent, then the lengths of the vertical segments 604A and 604B may be different according to the thickness of the second horizontal segment 606B that is between the first horizontal segment 606A and the top surface 610 of the web 102. It should also be understood that while the example shown in FIGURE 6 above describes and shows the first pre-cured angle 602A as overlapping on top of the second pre-cured angle 602B, the opposite may also be true. At operation 806, the pre-cured angles 602A and 602B are adhered to the outer edge 206 of the web 102 of the composite blade stringer 204, and the routine 800 ends.

## Claims

1. An edge protection and visual damage indication system (200) for a composite blade stringer (204), the system comprising:
the composite blade stringer (204) comprising a base (104) and a web (102), the web (102) extending away from the base (104) and defining an outer edge (206) opposite the base (104), wherein the web (102) is created by bonding together vertical portions of two angle charges of the blade stringer and the base (104) is created by bonding the horizontal portions extending from the web (102) to a stringer base material (112) with a filler (114) in between; and
an edge treatment (202) comprising a plurality of material layers (320), the edge treatment encompassing the outer edge (206) of the web, extending from a first surface (208) of the web (102) to a second surface (210) of the web (102), wherein
the plurality of material layers (320) of the edge treatment (202) comprises two layers configured as a first pre-cured angle (602A) and a separatly provided second pre-cured angle (602B),
wherein each pre-cured angle (602) comprises a vertical segment (604) configured to abut the first surface (208) or the second surface (210) of the web (102), and a horizontal segment (606) configured to abut the outer edge (206) of the web (102) or the horizontal segment (606) of the other pre-cured angle (602) such that the horizontal segments (606) of the first pre-cured angle (602A) and the second pre-cured angle (602B) overlap on the outer edge (206) of the web (102).

2. The edge protection and visual damage indication system (200) of claim 1, wherein the plurality of material layers of the edge treatment (202) comprises an adhesive layer (304) and a plurality of fiberglass layers (308).

3. The edge protection and visual damage indication system (200) of claim 2, wherein the plurality of fiberglass layers (308) comprises three fiberglass layers (308).

4. The edge protection and visual damage indication system (200) of claim 2, wherein each fiberglass layer (308) comprises a fiberglass fabric.

5. The edge protection and visual damage indication system (200) of claim 1 or 2, wherein the plurality of material layers (320) of the edge treatment (202) further comprises a color contrasting layer (306) positioned between the adhesive layer (304) and a fiberglass layer (308) of the plurality of fiberglass layers (320).

6. The edge protection and visual damage indication system (200) of claim 5, wherein the color contrasting layer (306) comprises a composite tape layer, wherein the composite tape layer comprises carbon fiber reinforced plastic (CFRP), wherein the plurality of fiberglass layers (320) comprises two fiberglass layers (308), and wherein the plurality of material layers (320) comprises a sequential arrangement of the adhesive layer (304), the composite tape layer, and the two fiberglass layers (308).

7. The edge protection and visual damage indication system (200) of any preceding claim, wherein the edge treatment (202) extends a distance (D) from the outer edge (206) of the web (102) toward the base (104) on both the first surface (208) and the second surface (210) of the web.

8. The edge protection and visual damage indication system (200) of claim 1, wherein the first pre-cured angle (602A) and the second pre-cured angle (602B) each comprise a fiberglass fabric.

9. The edge protection and visual damage indication system (200) of claim 1, wherein the first pre-cured angle (602A) and the second pre-cured angle (602B) each comprise a carbon fiber reinforced plastic.

10. The edge protection and visual damage indication system (200) of any of claims 1, 8 or 9, wherein the horizontal segments (606) of the first pre-cured angle (602A) and the second pre-cured angle (602B) are sized to overlap over a range of widths (W) such that the first pre-cured angle (602A) and the second pre-cured angle (602B) may be compatible with the web (102) having a first width and a second web of a second width of a second composite blade stringer (204) or compatible with a blade stringer (204) having a web (102) of variable thickness.

11. A method for providing composite blade stringer edge protection and visual damage indication, the method comprising:
applying an edge treatment (202) to an outer edge (206) of a web (102) of a composite blade stringer (204) such that the edge treatment (202) comprises at least two material layers (320) and encompasses the outer edge (206) of the web (102), extending from a first surface (208) of the web (102) to a second surface (210) of the web (102), wherein the web (102) is created by bonding together vertical portions of two angle charges of the blade stringer and a base (104) is created by bonding the horizontal portions extending from the web (102) to a stringer base material (112) with a filler (114) in between, wherein
the plurality of material layers (320) of the edge treatment (202) comprises two layers configured as a first pre-cured angle (602A) and a separatly provided second pre-cured angle (602B),
wherein each pre-cured angle (602) comprises a vertical segment (604) configured to abut the first surface (208) or the second surface (210) of the web (102), and a horizontal segment (606) configured to abut the outer edge (206) of the web (102) or the horizontal segment (606) of the other pre-cured angle (602) such that the horizontal segments (606) of the first pre-cured angle (602A) and the second pre-cured angle (602B) overlap on the outer edge (206) of the web (102).

12. The method of claim 11, wherein applying the edge treatment (202) comprises:
applying an adhesive layer (304) from the first surface (208) of the web (102), over the outer edge (206) of the web (102), and to the second surface (210) of the web (102);
applying the second pre-cured angle (602B) over the adhesive layer (304); and
applying the first pre-cured angle (602A) over the second pre-cured angle (602B).

## Patentansprüche

1. System (200) zum Kantenschutz und zur visuellen Beschädigungsanzeige für einen Verbundblatt-Stringer (204), wobei das System aufweist:
den Verbundblatt-Stringer (204), der einen Sockel (104) und einen Steg (102) aufweist, wobei sich der Steg (102) vom Sockel (104) weg erstreckt und eine äußere Kante (206) gegenüberliegend zum Sockel (104) definiert, wobei der Steg (102) durch miteinander Verbinden von vertikalen Abschnitten von zwei Winkelladungen des Blatt-Stringers erzeugt wird, und wobei der Sockel (104) durch Verbinden der horizontalen Abschnitte, die sich von dem Steg (102) zu einem Stringer-Sockelmaterial (112) erstrecken, mit einer Füllung (114) dazwischen erzeugt wird, und
eine Kantenbehandlung (202), die eine Vielzahl von Materialschichten (320) aufweist, wobei die Kantenbehandlung die äußere Kante (206) des Stegs umgibt, die sich von einer ersten Fläche (208) des Stegs (102) zu einer zweiten Fläche (210) des Stegs (102) erstrecken,
wobei die Vielzahl von Materialschichten (320) der Kantenbehandlung (202) zwei Schichten aufweist, die als ein erster vorgehärteter Winkel (602A) und ein separat vorgesehener, zweiter vorgehärteter Winkel (602B) eingerichtet sind,
wobei jeder vorgehärtete Winkel (602) ein vertikales Segment (604), das zum Anstoßen an die erste Fläche (208) oder die zweite Fläche (210) des Stegs (102) eingerichtet ist, und ein horizontales Segment (606), das zum Anstoßen an die äußere Kante (206) des Stegs (102) eingerichtet ist, oder das horizontale Segment (606) des anderen vorgehärteten Winkels (602) aufweist, so dass die horizontalen Segmente (606) des ersten vorgehärteten Winkels (602A) und des zweiten vorgehärteten Winkels (602B) sich auf der äußeren Kante (206) des Stegs (102) überlappen.

2. System (200) zum Kantenschutz und zur visuellen Beschädigungsanzeige nach Anspruch 1, wobei die Vielzahl von Materialschichten der Kantenbehandlung (202) eine Klebschicht (304) und eine Vielzahl von Fiberglasschichten (308) aufweist.

3. System (200) zum Kantenschutz und zur visuellen Beschädigungsanzeige nach Anspruch 2, wobei die Vielzahl von Fiberglasschichten (308) drei Fiberglasschichten (308) aufweist.

4. System (200) zum Kantenschutz und zur visuellen Beschädigungsanzeige nach Anspruch 2, wobei jede Fiberglasschicht (308) ein Fiberglasgewebe aufweist.

5. System (200) zum Kantenschutz und zur visuellen Beschädigungsanzeige nach Anspruch 1 oder 2, wobei die Vielzahl von Materialschichten (320) der Kantenbehandlung (202) ferner eine Farbkontrastschicht (306) aufweist, die zwischen der Klebschicht (304) und einer Fiberglasschicht (308) der Vielzahl von Fiberglasschichten (320) positioniert ist.

6. System (200) zum Kantenschutz und zur visuellen Beschädigungsanzeige nach Anspruch 5, wobei die Farbkontrastschicht (306) eine Verbundstreifenschicht aufweist, wobei die Verbundstreifenschicht kohlenfaserverstärkten Kunststoff (CFRP) aufweist, wobei die Vielzahl von Fiberglasschichten (320) zwei Fiberglasschichten (308) aufweist und wobei die Vielzahl von Materialschichten (320) eine sequentielle Anordnung der Haftschicht (304), der Verbundstreifenschicht und der zwei Fiberglasschichten (308) aufweist.

7. System (200) zum Kantenschutz und zur visuellen Beschädigungsanzeige nach einem der vorhergehenden Ansprüche, wobei die Kantenbehandlung (202) sich um eine Entfernung (D) von der äußeren Kante (206) des Stegs (102) in Richtung des Sockels (104) sowohl bei der ersten Fläche (208) als auch bei der zweiten Fläche (210) des Stegs erstreckt.

8. System (200) zum Kantenschutz und zur visuellen Beschädigungsanzeige nach Anspruch 1, wobei der erste vorgehärtete Winkel (602A) und der zweite vorgehärtete Winkel (602B) jeweils ein Fiberglasgewebe aufweisen.

9. System (200) zum Kantenschutz und zur visuellen Beschädigungsanzeige nach Anspruch 1, wobei der erste vorgehärtete Winkel (602A) und der zweite vorgehärtete Winkel (602B) jeweils einen kohlenfaserverstärkten Kunststoff aufweisen.

10. System (200) zum Kantenschutz und zur visuellen Beschädigungsanzeige nach einem der Ansprüche 1, 8 oder 9, wobei die horizontalen Segmente (606) des ersten vorgehärteten Winkels (602A) und des zweiten vorgehärteten Winkels (602B) dimensioniert sind, um sich über einen Bereich von Breiten (W) derart zu überlappen, dass der erste vorgehärtete Winkel (602A) und der zweite vorgehärtete Winkel (602B) kompatibel zum Steg (102), der eine erste Breite aufweist, und zu einem zweiten Steg mit einer zweiten Breite eines zweiten Verbundblatt-Stringers (204) sein können, oder kompatibel zu einem Blatt-Stringer (204) mit einem Steg (102) variabler Dicke sein können.

11. Verfahren zum Vorsehen eines Kantenschutzes für einen Verbundblatt-Stringer und einer visuellen Beschädigungsanzeige, wobei das Verfahren aufweist:
Anwenden einer Kantenbehandlung (202) auf eine äußere Kante (206) eines Stegs (102) eines Verbundblatt-Stringers (204), so dass die Kantenbehandlung (202) zumindest zwei Materialschichten (320) aufweist und die äußere Kante (206) des Stegs (102) umgibt, die sich von einer ersten Fläche (208) des Stegs (102) zu einer zweiten Fläche (210) des Stegs (102) erstreckt, wobei der Steg (102) durch miteinander Verbinden vertikaler Abschnitte von zwei Winkelladungen des Blatt-Stringers erzeugt wird, und wobei ein Sockel (104) durch Verbinden der horizontalen Abschnitte, die sich von dem Steg (102) zu einem Stringer-Sockelmaterial (112) erstrecken, mit einer Füllung (114) dazwischen erzeugt wird,
wobei die Vielzahl von Materialschichten (320) der Kantenbehandlung (202) zwei Schichten aufweist, die als ein erster vorgehärteter Winkel (602) und ein getrennt vorgesehener, zweiter vorgehärteter Winkel (602b) eingerichtet sind,
wobei jeder vorgehärtete Winkel (602) ein vertikales Segment (604), das zum Anstoßen an die erste Fläche (208) oder an die zweite Fläche (210) des Stegs (102) eingerichtet ist, und ein horizontales Segment (606), das zum Anstoßen an die äußere Kante (206) des Stegs (102) eingerichtet ist, oder das horizontale Segment (606) des anderen vorgehärteten Winkels (602) aufweist, so dass die horizontalen Segmente (606) des ersten vorgehärteten Winkels (602A) und des zweiten vorgehärteten Winkels (602B) sich auf der äußeren Kante (206) des Stegs (102) überlappen.

12. Verfahren nach Anspruch 11, wobei ein Anwenden der Kantenbehandlung (202) aufweist:
Applizieren einer Klebschicht (304) von der ersten Fläche (208) des Stegs (102) über die äußere Kante (206) des Stegs (102) und zur zweiten Fläche (210) des Stegs (102);
Applizieren des zweiten vorgehärteten Winkels (602B) über die Klebschicht (304); und
Applizieren des ersten vorgehärteten Winkels (602A) über den zweiten vorgehärteten Winkel (602B).

## Revendications

1. Système de protection de bord et d'indication visuelle de dommage (200) pour un longeron de pale composite (204), le système comprenant :
le longeron de pale composite (204) comprenant une semelle (104) et une âme (102), l'âme (102) s'étendant depuis la semelle (104) et définissant un bord extérieur (206) à l'opposé de la semelle (104), l'âme (102) étant créée en assemblant des parties verticales de deux charges en équerre du longeron de pale et la semelle (104) étant créée en assemblant les parties horizontales s'étendant depuis l'âme (102) à un matériau de semelle de longeron (112) avec un matériau de remplissage (114) entre eux ; et
un traitement de bord (202) comprenant une pluralité de couches de matière (320), le traitement de bord enveloppant le bord extérieur (206) de l'âme, s'étendant depuis une première surface (208) de l'âme (102) jusqu'à une deuxième surface (210) de l'âme (102),
dans lequel la pluralité de couches de matière (320) du traitement de bord (202) comprend deux couches configurées comme une première équerre prédurcie (602A) et une deuxième équerre prédurcie (602B) fournie séparément,
dans lequel chaque équerre prédurcie (602) comprend un segment vertical (604) configuré pour jouxter la première surface (208) ou la deuxième surface (210) de l'âme (102), et un segment horizontal (606) configuré pour jouxter le bord extérieur (206) de l'âme (102) ou le segment horizontal (606) de l'autre équerre prédurcie (602) de telle sorte que les segments horizontaux (606) de la première équerre prédurcie (602A) et de la deuxième équerre prédurcie (602B) se chevauchent sur le bord extérieur (206) de l'âme (102).

2. Système de protection de bord et d'indication visuelle de dommage (200) de la revendication 1, dans lequel la pluralité de couches de matière du traitement de bord (202) comprend une couche adhésive (304) et une pluralité de couches de fibres de verre (308).

3. Système de protection de bord et d'indication visuelle de dommage (200) de la revendication 2, dans lequel la pluralité de couches de fibres de verre (308) comprend trois couches de fibres de verre (308).

4. Système de protection de bord et d'indication visuelle de dommage (200) de la revendication 2, dans lequel chaque couche de fibres de verre (308) comprend un tissu de fibres de verre.

5. Système de protection de bord et d'indication visuelle de dommage (200) de la revendication 1 ou 2, dans lequel la pluralité de couches de matière (320) du traitement de bord (202) comprend en outre une couche de contraste de couleur (306) positionnée entre la couche adhésive (304) et une couche de fibres de verre (308) de la pluralité de couches de fibres de verre (308).

6. Système de protection de bord et d'indication visuelle de dommage (200) de la revendication 5, dans lequel la couche de contraste de couleur (306) comprend une couche de ruban composite, dans lequel la couche de ruban composite comprend du plastique renforcé de fibres de carbone (CFRP), dans lequel la pluralité de couches de fibres de verre (308) comprend deux couches de fibres de verre (308), et dans lequel la pluralité de couches de matière (320) comprend un agencement successif de la couche adhésive (304), de la couche de ruban composite, et des deux couches de fibres de verre (308).

7. Système de protection de bord et d'indication visuelle de dommage (200) d'une quelconque revendication précédente, dans lequel le traitement de bord (202) s'étend sur une distance (D) depuis le bord extérieur (206) de l'âme (102) vers la semelle (104) à la fois sur la première surface (208) et la deuxième surface (210) de l'âme.

8. Système de protection de bord et d'indication visuelle de dommage (200) de la revendication 1, dans lequel la première équerre prédurcie (602A) et la deuxième équerre prédurcie (602B) comprennent chacune un tissu de fibres de verre.

9. Système de protection de bord et d'indication visuelle de dommage (200) de la revendication 1, dans lequel la première équerre prédurcie (602A) et la deuxième équerre prédurcie (602B) comprennent chacune un plastique renforcé de fibres de carbone.

10. Système de protection de bord et d'indication visuelle de dommage (200) de l'une quelconque des revendications 1, 8 ou 9, dans lequel les segments horizontaux (606) de la première équerre prédurcie (602A) et la deuxième équerre prédurcie (602B) sont dimensionnés pour se chevaucher sur une gamme de largeurs (W) de telle sorte que la première équerre prédurcie (602A) et la deuxième équerre prédurcie (602B) peuvent être compatibles avec l'âme (102) ayant une première largeur et une deuxième âme d'une deuxième largeur d'un deuxième longeron de pale composite (204) ou compatibles avec un longeron de pale (204) ayant une âme (102) d'épaisseur variable.

11. Procédé d'obtention d'une protection de bord et d'une indication visuelle de dommage d'un longeron de pale composite, le procédé comprenant :
l'application d'un traitement de bord (202) à un bord extérieur (206) d'une âme (102) d'un longeron de pale composite (204) de telle sorte que le traitement de bord (202) comprenne au moins deux couches de matière (320) et enveloppe le bord extérieur (206) de l'âme (102), s'étendant depuis une première surface (208) de l'âme (102) jusqu'à une deuxième surface (210) de l'âme (102), l'âme (102) étant créée en assemblant des parties verticales de deux charges en équerre du longeron de pale et la semelle (104) étant créée en assemblant les parties horizontales s'étendant depuis l'âme (102) à un matériau de semelle de longeron (112) avec un matériau de remplissage (114) entre elles,
dans lequel la pluralité de couches de matière (320) du traitement de bord (202) comprend deux couches configurées comme une première équerre prédurcie (602A) et une deuxième équerre prédurcie (602B) fournie séparément,
dans lequel chaque équerre prédurcie (602) comprend un segment vertical (604) configuré pour jouxter la première surface (208) ou la deuxième surface (210) de l'âme (102), et un segment horizontal (606) configuré pour jouxter le bord extérieur (206) de l'âme (102) ou le segment horizontal (606) de l'autre équerre prédurcie (602) de telle sorte que les segments horizontaux (606) de la première équerre prédurcie (602A) et la deuxième équerre prédurcie (602B) se chevauchent sur le bord extérieur (206) de l'âme (102).

12. Procédé de la revendication 11, dans lequel l'application du traitement de bord (202) comprend :
l'application d'une couche adhésive (304) depuis la première surface (208) de l'âme (102), par-dessus le bord extérieur (206) de l'âme (102), et jusqu'à la deuxième surface (210) de l'âme (102) ;
l'application de la deuxième équerre prédurcie (602B) par-dessus la couche adhésive (304) ; et
l'application de la première équerre prédurcie (602A) par-dessus la deuxième équerre prédurcie (602B).
